# FASCICULE DE BREVET EUROPEEN

(11) **EP 2 614 351 B1**
(45) Date de publication et mention de la délivrance du brevet: **15.11.2017**
(21) Numéro de dépôt: 11752547.7
(22) Date de dépôt: 05.09.2011
(51) Int. Cl.: G01M 17/02

(54) **DISPOSITIF DE TEST POUR LA MESURE DES EFFORTS SUPPORTES PAR UN PNEUMATIQUE**
TESTVORRICHTUNG ZUR MESSUNG DER VON EINEM REIFEN GETRAGENEN LASTEN
TEST DEVICE FOR MEASURING LOADS SUPPORTED BY A TYRE

(30) Priorité: 07.09.2010 FR 1057079
(43) Date de publication de la demande: 17.07.2013
(73) Titulaire: Compagnie Générale des Etablissements Michelin, 63000 Clermont-Ferrand (FR)
(72) Inventeur: DESSEVRE, Dominique, F-63040 Clermont-Ferrand Cedex 9 (FR); BEGOU, Pierre-Alain, F-63040 Clermont-Ferrand Cedex 9 (FR); SZENTE, Mark, H-2194 Tura (HU); FORISSIER, Jean-François, F-63040 Clermont-Ferrand Cedex 9 (FR)
(74) Mandataire: Le Cam, Stéphane Georges Elie
(86) Numéro de dépôt international: PCT/EP2011/065335
(87) Numéro de publication internationale: WO 2012/032015

(56) Documents cités:
- FR-A1- 2 866 114
- US-A- 3 483 744
- US-A1- 2008 236 268
- HUI S ET AL: "Torque control strategy for a parallel hydraulic hybrid vehicle", JOURNAL OF TERRAMECHANICS, PERGAMON PRESS, HEADINGTON HILL HALL, OXFORD, GB LNKD- DOI:10.1016/J.JTERRA.2009.08.004, vol. 46, no. 6, 1 décembre 2009 (2009-12-01), pages 259-265, XP026718701, ISSN: 0022-4898 [extrait le 2009-09-23]
- HUI S ET AL: "Research on the system configuration and energy control strategy for parallel hydraulic hybrid loader", AUTOMATION IN CONSTRUCTION, ELSEVIER SCIENCE PUBLISHERS, AMSTERDAM, NL LNKD- DOI:10.1016/J.AUTCON.2009.10.006, vol. 19, no. 2, 1 mars 2010 (2010-03-01), pages 213-220, XP026912900, ISSN: 0926-5805 [extrait le 2009-11-22]

## Description

L'invention est relative à un dispositif de test pour la mesure d'efforts supportés par un pneumatique roulant sur un sol.

Bien que non limitée à de telles applications, l'invention sera plus particulièrement présentée en référence à des pneumatiques équipant des véhicules agricoles, de type tracteurs, roulant sur des sols meubles, et plus spécifiquement encore aux pneumatiques équipant les roues motrices de tels véhicules.

Les demandes concernant ces véhicules sont de plus en plus exigeantes notamment en termes de compromis entre la charge portée et/ou tractée et l'endommagement des sols résultant du passage du véhicule. En effet, les cadences de travail et les rendements souhaités imposent à ces véhicules de porter et/ou tracter des charges toujours plus importantes avec une volonté de moindre endommagement des sols pour éviter de nuire aux cultures et limiter les risques d'érosion. En parallèle de ces exigences croissantes, des exigences plus importantes également en matière de consommation d'énergie existent et se développent dans le monde agricole. Or les roulages notamment sur sol meuble conduisent à un patinage des pneumatiques sur ledit sol qui est une cause de surconsommation. De même, la résistance à l'avancement liée aux déformations des pneumatiques et du sol du fait de sa nature contribue également pour une part non négligeable à la consommation énergétique du véhicule.

Les roulages sur sol dur de type asphalte sont également concernés par ces considérations énergétiques, la seule déformation des pneumatiques ayant un effet sur la consommation du véhicule, les déplacements sur route se faisant de plus en plus sur de longues distances et à des vitesses de plus en plus importantes, proches de 50 Km/h, voire supérieures.

La connaissance des efforts supportés par le pneumatique lors de roulages de tels véhicules notamment sur des sols meubles peut permettre d'optimiser la conception des pneumatiques et par exemple de les concevoir en tenant compte de l'usage qu'il en sera fait.

Les inventeurs se sont ainsi donnés pour mission de définir un dispositif de test pour la mesure des efforts supportés par un pneumatique lors d'un roulage d'un véhicule comportant ce pneumatique, ledit véhicule circulant sur un sol meuble.

Les inventeurs se sont également donnés pour mission de fournir un tel dispositif pour effectuer des mesures sur des pneumatiques de grande dimension pouvant porter des charges supérieures à 8 Tonnes. Il n'existe en effet pas de moyens pour permettre une reproduction des conditions de roulage de tels pneumatiques équipés de systèmes de mesure permettant d'atteindre une précision suffisante pour permettre d'optimiser la conception des pneumatiques.

Le document FR 2 866 114 décrit un dispositif motorisé de test comportant des roues porteuses et un pneumatique d'avion à tester en simulant des phases d'atterrissage ou de décollage.

Le document US 3 483 744 décrit un dispositif motorisé de test pour la mesure d'efforts supportés par un pneumatique de camion en roulage.

Ces buts ont été atteints selon l'invention par un dispositif mobile de test motorisé pour la mesure des efforts supportés par un pneumatique en roulage, ledit dispositif étant constitué d'un cadre rigide porté par au moins deux roues porteuses sur lesquelles un couple est appliqué et comportant un axe solidaire du cadre portant une roue de test pour la mesure des efforts supportés par ledit pneumatique, l'axe étant relié au cadre par un vérin de mise en charge, le dispositif mobile de test motorisé comportant un système solidaire dudit dispositif mobile de test, ledit système appliquant à la roue de test un couple de sens opposé à ceux appliqués aux roues porteuses, et le dispositif mobile de test motorisé comportant un système de liaison entre la roue de test et les roues porteuses pour transmettre au moins une partie de la puissance développée par le couple freineur appliqué à la roue de test sous forme de couple moteur aux roues porteuses ou pour transmettre au moins une partie de la puissance développée par les couples freineurs appliqués aux roues porteuses sous forme de couple moteur à la roue de test.

Au sens de l'invention, un couple est appliqué à une roue dès lors que ledit couple provient de l'action directe d'un système solidaire du dispositif mobile de test.

De préférence selon l'invention, le couple appliqué à la roue de test est moteur et le couple appliqué aux roues porteuses est freineur. Conformément à l'invention, la puissance développée par le couple freineur appliqué aux roues porteuses est alors utilisée sous forme de couple moteur appliqué à la roue de test au travers du système de liaison, ladite puissance développée par le couple freineur étant récupérée par le système de liaison lors de l'application du couple freineur sur les roues porteuses.

La situation inverse est toutefois prévue par le dispositif pour satisfaire à des conditions particulières de test correspondant par exemple à des tests sur des roues destinées à équiper des véhicules non motorisés tels que des remorques. Conformément à l'invention, la puissance développée par le couple freineur appliqué à la roue de test est alors utilisée sous forme de couple moteur appliqué aux roues porteuses au travers du système de liaison, ladite puissance développée par le couple freineur étant récupérée par le système de liaison lors de l'application du couple freineur sur la roue de test.

Avantageusement selon l'invention le dispositif mobile présente une masse supérieure à 12 000 Kg.

Un tel dispositif ainsi défini selon l'invention et réalisé par tous moyens connus de l'homme du métier pour maximiser la rigidité du cadre rigide et obtenir des dimensions suffisantes, permet l'analyse de pneumatique testé présentant un diamètre supérieur à 2 mètres et/ou de largeur supérieur à 0.9 mètre et sur lequel on applique une charge verticale supérieure à 80000 N.

Selon un mode de réalisation avantageux de l'invention, le dispositif mobile de mesure est associé à un véhicule motorisé.

Dans le cas d'un dispositif comportant deux roues porteuses, le véhicule motorisé s'associe au cadre rigide pour former un support stable de la roue de test.

Selon un mode de réalisation préféré de l'invention, le cadre rigide est porté par quatre roues porteuses. Selon ce mode de réalisation, le véhicule motorisé n'est présent que pour fournir la puissance nécessaire à l'animation du dispositif mobile de test et le guider selon la trajectoire souhaitée. La précision des mesures s'en trouve améliorée du fait d'une plus grande stabilité du dispositif mobile notamment lors de roulages sur des sols accidentés.

Avantageusement encore selon ce mode de réalisation, le véhicule motorisé est positionné à l'arrière du dispositif mobile de test selon la direction d'avancement de l'ensemble pour contribuer encore à l'amélioration de la stabilité du dispositif mobile de test et donc à la précision des mesures, notamment lorsqu'une charge importante est appliquée sur la roue de test en phase motrice.

Selon une autre variante de réalisation de l'invention, le système fournissant la puissance au moteur permettant l'animation du dispositif mobile de test est embarqué sur le cadre rigide, ledit dispositif mobile de test n'étant plus alors associé à un véhicule motorisé.

Les inventeurs ont su mettre en évidence que le dispositif mobile de test ainsi défini selon l'invention permet de faire rouler des pneumatiques à vitesse constante en imposant un patinage de la roue de test et ainsi accéder à des mesures correspondant à des conditions de roulage connues du pneumatique testé.

Les inventeurs ont encore su mettre en évidence que dans le cas d'un dispositif mobile de test comportant quatre roues porteuses et tiré ou propulsé par un véhicule motorisé, il est possible d'obtenir l'animation du dispositif selon l'invention avec une vitesse constante définie, le pneumatique de test patinant sur le sol en s'affranchissant de la motricité des roues du véhicule motorisé, ce dernier pouvant rouler sans vitesse enclenchée et donc en roues libres. De telles conditions de mesure permettent d'obtenir des résultats encore plus précis du fait d'une stabilité encore augmentée. En effet la résultante nulle des efforts, liée aux mesures à vitesse constante, est obtenue par une somme de forces qui pour l'essentiel d'entre elles s'exerce au niveau du sol, et plus exactement au niveau des aires de contact des quatre pneumatiques des roues porteuses et du pneumatique testé. Ce résultat est en effet plus précis que lorsque les roues du véhicule motorisé sont motrices ou freineuses selon les conditions recherchées puisque dans un tel cas l'une des forces permettant d'obtenir une résultante des efforts nulle n'est plus au même niveau mais située au niveau de la barre d'attelage ou timon liant le véhicule motorisé au dispositif de mesure.

Le système de liaison entre la roue de test et les roues porteuses transmettant au moins une partie de la puissance développée par le couple freineur permet également de contribuer à la précision des mesures en limitant la taille du système fournissant la puissance au moteur assurant la force motrice. Qu'il s'agisse d'un véhicule motorisé ou bien d'un système embarqué sur le dispositif mobile de test, celui-ci pourra être plus petit et donc moins perturbant pour les mesures. En effet, le poids peut avoir un impact direct sur la précision des mesures car les roues du véhicule motorisé et/ou les roues porteuses du dispositif mobile viennent compacter le sol et donc modifient l'environnement de la mesure. En outre, les coûts liés à de tels véhicules motorisés ou systèmes embarqués sont proportionnels à leur taille ou plus exactement à la puissance qu'ils délivrent. Le dispositif ainsi conçu selon l'invention permet donc d'en limiter les coûts.

Avantageusement selon l'invention, le système de liaison entre la roue de test et les roues porteuses transmettant au moins une partie de la puissance développée par le couple freineur est de type hydraulique. Il peut encore s'agir selon d'autres modes de réalisation d'un système mécanique ou bien encore d'un système électrique.

Un exemple de réalisation sous forme d'un système mécanique repose sur une liaison cinématique entre la roue de test et les roues porteuses, telle que la roue souhaitée motrice tourne plus vite, au sens de sa vitesse périphérique, que les roues souhaitées freineuses, au sens de leur vitesse périphérique également. La vitesse périphérique est considérée ici, et non la vitesse de rotation, car les diamètres respectifs de la roue de test et des roues porteuses peuvent différer significativement. Suivant la conception ou le réglage des paramètres de la liaison cinématique, le rapport de démultiplication entre la vitesse périphérique de la roue de test et la vitesse périphérique des roues porteuses peut être ajusté suivant les besoins du test. Dans l'exemple de réalisation mécanique, la liaison cinématique peut être assurée par différents composants mécaniques bien connus, tels qu'une boîte de vitesse mécanique traditionnelle permettant un réglage par pas du rapport de démultiplication entre roue de test et roues porteuses. Une autre réalisation repose sur l'utilisation d'un variateur de vitesse afin de permettre un réglage continu du rapport de démultiplication. Une troisième réalisation possible de liaison cinématique mécanique met en oeuvre un train épicycloïdal, les 3 arbres du train, liés respectivement aux deux planétaires et au système de satellites internes au dit train, étant reliés extérieurement au train à la roue de test, au système de roues porteuses, et à un système de commande du rapport de démultiplication.

Technologiquement, la liaison cinématique par éléments mécaniques peut être remplacée par un circuit hydraulique (respectivement électrique) comprenant une pompe hydraulique (respectivement génératrice) liée aux roues porteuses et un moteur hydraulique (respectivement électrique) lié à la roue de test, ces deux éléments étant connectés via une unité de contrôle hydraulique (respectivement électrique) pilotant les couples et vitesses de rotation pour obtenir le fonctionnement voulu. L'emploi de moteurs/pompes (respectivement moteurs/génératrices), l'ajout d'un troisième élément piloté, etc... permettant de réaliser les améliorations décrites ci-dessus dans leur version mécanique.

Selon un mode de réalisation préféré de l'invention, la roue de test est liée au cadre rigide par l'intermédiaire d'un support de moyeu, la roue étant fixée audit moyeu, ledit support de moyeu étant lié au cadre rigide par un ensemble de deux bras, lesdits bras étant articulés autour d'axes transversaux à l'une de leurs extrémités liée au cadre rigide et lesdits bras étant articulés autour d'axes transversaux à leur autre extrémité liée au support de moyeu.

Selon ce mode de réalisation de l'invention, la présence des deux bras tels que décrits précédemment contribue à la précision du positionnement de la roue de test et améliore encore la précision des mesures. En effet, les deux bras permettent une amélioration de la maîtrise des différents mouvements de rotation du support de moyeu par rapport au cadre rigide. Les deux bras assurent encore la précision du maintien selon les directions longitudinale et transversale en référence à la direction d'avancement du dispositif mobile de test. Le maintien selon la direction verticale par rapport au cadre rigide est assuré par le vérin de mise en charge, celui-ci déterminant la charge imposée à la roue de test.

Les différentes directions sont définies ci-après en référence à un pneumatique et lorsqu'il s'agit de directions par rapport au cadre rigide il s'agit du pneumatique de test.

La direction circonférentielle du pneumatique, ou direction longitudinale, est la direction correspondant à la périphérie du pneumatique et définie par la direction de roulement du pneumatique.

La direction transversale ou axiale du dispositif mobile ou du pneumatique est parallèle à l'axe de rotation du pneumatique.

L'axe de rotation du pneumatique est l'axe autour duquel il tourne en utilisation normale.

Les rigidités de translation longitudinale et transversale par rapport au cadre rigide mesurées à l'extrémité de chacun des deux bras sont supérieures à 2.10⁷ N.m⁻¹ et de préférence encore supérieures à 10⁸ N.m⁻¹.

La rigidité associée à la rotation du support de moyeu par rapport au cadre rigide selon un axe confondu avec la direction longitudinale est supérieure à 1.6.10⁶ N.m.rad⁻¹ et de préférence supérieure à 6. 10⁶ N.m.rad⁻¹.

De préférence selon l'invention, le vérin de mise en charge est positionné selon une direction sensiblement verticale et fixé au support de moyeu à une distance transversale du centre de la roue de test inférieure à 30 cm et de préférence encore inférieure à 15 cm pour les charges appliquées les plus importantes.

Au sens de l'invention, le centre de la roue est selon la direction transversale, le milieu de la jante sur laquelle vient le pneumatique testé.

Selon un mode de réalisation avantageux de l'invention, le dispositif mobile de test comporte un outil de préparation du sol positionné en amont de la roue de test selon la direction d'avancement dudit dispositif mobile lors d'un test.

Un tel outil permet de modifier la structure du sol et adapter la mesure à des conditions choisies. Cet outil est par exemple une roue équipée d'un pneumatique qui vient compacter le sol comme le ferait la roue avant d'un tracteur devant celle équipant l'essieu moteur arrière. Il peut encore s'agir d'un soc tel que celui équipant une charrue ou d'une série de dents telles que celles équipant un cultivateur pour permettre d'effectuer des tests correspondant à un roulage sur un terrain labouré ou travaillé.

Avantageusement encore selon l'invention le point d'ancrage d'un tel outil sur le cadre rigide est réglable selon la direction transversale à la direction d'avancement pour autoriser différents cas de figures d'un impact sur l'aspect du sol.

Une variante de réalisation du dispositif mobile de test selon l'invention prévoit que la direction longitudinale d'au moins une roue porteuse forme un angle avec la direction longitudinale de la roue de test. De préférence, les angles formés par les directions longitudinales de chacune des roues porteuses avec la direction longitudinale de la roue de test sont identiques.

Selon une telle variante de réalisation de l'invention, il est possible d'effectuer des mesures correspondant à un roulage en dérive.

Selon d'autres variantes de réalisations de l'invention, les directions des essieux des roues porteuses forment un angle avec la direction transversale de la roue de test. Il est alors possible d'effectuer des mesures correspondant à un roulage en carrossage de la roue de test.

Le dispositif mobile de test selon l'invention permet conformément à ce qui vient d'être décrit d'accéder à des mesures précises sur la combinaison d'une roue équipée d'un pneumatique circulant sur un sol dans des conditions connues. Avantageusement il est prévu selon l'invention, notamment dans le cas de roulage sur sol meuble, d'effectuer des tests sur différents sols avec un pneumatique donné pour mieux identifier l'effet du changement de sol et/ou l'effet du pneumatique.

De même, il est possible d'effectuer plusieurs tests sur un même sol avec différents pneumatiques pour évaluer l'effet du changement de pneumatique et/ou l'effet du sol.

D'autres détails et caractéristiques avantageux de l'invention ressortiront ci-après de la description d'un exemple de réalisation de l'invention en référence aux figures 1 à 3 qui représentent :
- figure 1, une représentation schématique d'un dispositif mobile de test vue selon un mode de réalisation de l'invention,
- figure 2, une représentation schématique partielle en perspective de la roue de test associé au moyeu porté par son support,
- figure 3, une représentation schématique partielle en perspective des bras portant le support de moyeu.

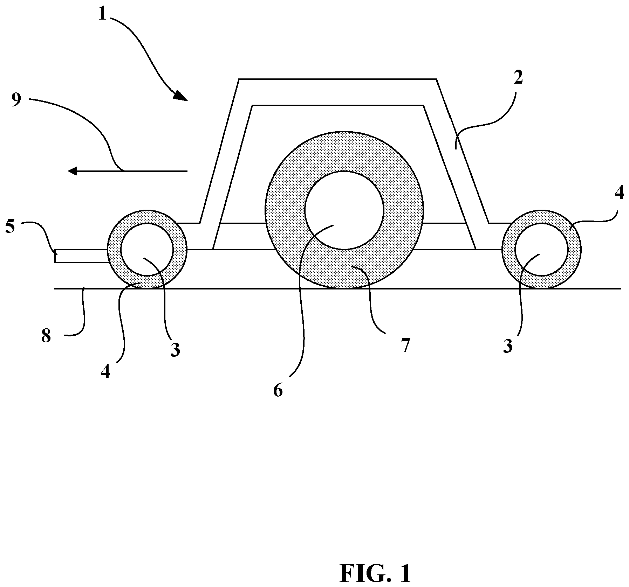

Les figures 1 à 3 ne sont pas représentées à l'échelle pour en simplifier la compréhension.

La figure 1 illustre très schématiquement un dispositif mobile 1 de test. Ce dispositif 1 est constitué d'un cadre rigide 2 porté par quatre roues porteuses 3. Seules deux roues 3 sont représentées sur le schéma de la figure 1, les deux autres étant fixés aux autres extrémités des essieux portant respectivement les deux roues illustrées. Les roues porteuses sont équipées de pneumatiques 4. Un timon 5 est prévu pour relier le dispositif 1 à un véhicule motorisé, non représenté sur la figure, et pour transmettre la puissance nécessaire depuis ce véhicule vers le dispositif 1.

Sur la figure 1, apparaît encore la roue de test 6 portée par le cadre rigide 2, celle-ci étant équipée d'un pneumatique 7.

Le dispositif 1 ainsi constitué est amené à se déplacer sur le sol 8 selon le sens de la flèche 9.

Comme expliqué précédemment et conformément à l'invention, la roue de test 6 est motorisée par la puissance transmise depuis le véhicule motorisé. Et les roues porteuses sont quant à elles soit simultanément motrices, soit simultanément freineuses pour obtenir un roulage à vitesse constante avec une roue de test patinant sur le sol 8.

Un système avantageusement hydraulique lie la roue de test et les roues porteuses pour transmettre la puissance développée par le couple freineur. Cette récupération de la puissance freineuse pour l'alimentation en puissance motrice permet de limiter le poids, l'encombrement et le coût du moteur du véhicule motorisé.

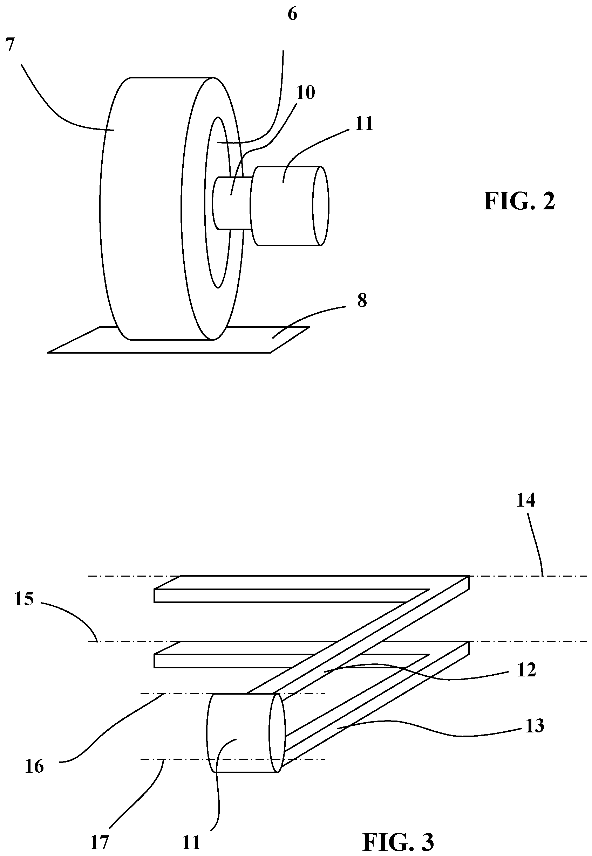

La figure 2 illustre toujours très schématiquement mais plus précisément le positionnement de la roue de test équipée du pneumatique 7 sur le moyeu 10 qui l'entraîne en rotation lors des tests. Ce moyeu 10 est lui-même porté par le support de moyeu 11 sur lequel vient se fixer le vérin de mise en charge, non représenté sur les figures, ledit vérin permettant d'imposer la charge à la roue de test 6.

La figure 3 illustre schématiquement les deux bras 12, 13 qui sont d'une part fixés selon les axes 14, 15 au cadre rigide 2 et d'autre part au support de moyeu 11 selon deux axes 16, 17, des mouvements de rotation étant prévus autour de chacun de ces axes.

Le maintien par les deux bras 12, 13 du support de moyeu 11 contribue à la précision du positionnement de la roue de test 6. D'une part, les deux bras permettent une amélioration de la maîtrise des différents mouvements de rotation du support de moyeu par rapport au cadre rigide et d'autre part, ils assurent la précision du maintien selon les directions longitudinale et transversale en référence à la direction d'avancement 9 du dispositif 1.

## Revendications

1. Dispositif mobile de test motorisé pour la mesure d'efforts supportés par un pneumatique en roulage, ledit dispositif étant constitué d'un cadre rigide porté par au moins deux roues porteuses sur lesquelles un couple est appliqué et comportant un axe solidaire du cadre portant une roue de test pour la mesure des efforts supportés par ledit pneumatique, tel **que** l'axe est relié au cadre par un vérin de mise en charge, tel **que** le dispositif mobile de test motorisé comporte un système solidaire dudit dispositif mobile de test, ledit système appliquant à la roue de test un couple de sens opposé à ceux appliqués aux roues porteuses et **caractérisé en ce que** le dispositif mobile de test motorisé comporte un système de liaison entre la roue de test et les roues porteuses pour transmettre au moins une partie de la puissance développée par le couple freineur appliqué à la roue de test sous forme de couple moteur aux roues porteuses ou pour transmettre au moins une partie de la puissance développée par les couples freineurs appliqués aux roues porteuses sous forme de couple moteur à la roue de test.

2. Dispositif mobile de test selon la revendication 1, **caractérisé en ce qu'**il est associé à un véhicule motorisé.

3. Dispositif mobile de test selon la revendication 1 ou 2, **caractérisé en ce que** le cadre rigide est porté par quatre roues porteuses.

4. Dispositif mobile de test selon l'une des revendications 1 à 3, **caractérisé en ce que** la roue de test est liée au cadre rigide par l'intermédiaire d'un support de moyeu la roue étant fixée audit moyeu, **en ce que** ledit support de moyeu est lié au cadre rigide par un ensemble de deux bras **en ce que** lesdits bras sont articulés autour d'axes transversaux à l'une de leurs extrémités liée au cadre rigide et **en ce que** lesdits bras sont articulés autour d'axes transversaux à leur autre extrémité liée au support de moyeu.

5. Dispositif mobile de test selon l'une des revendication 1 à 4, **caractérisé en ce que** le vérin est positionné selon une direction sensiblement vertical.

6. Dispositif mobile de test selon la revendication 4, **caractérisé en ce que** le vérin de mise en charge est fixé au support de moyeu à une distance transversale du centre de la roue de test inférieure à 30 cm.

7. Dispositif mobile de test selon l'une des revendications précédentes, **caractérisé en ce qu'**il comporte un outil de préparation du sol positionné en amont de la roue de test selon la direction d'avancement dudit dispositif mobile lors d'un test.

8. Dispositif mobile de test selon l'une des revendications précédentes, **caractérisé en ce que** la direction longitudinale d'au moins une roue porteuse forme un angle avec la direction longitudinale de la roue de test.

9. Dispositif mobile de test selon la revendication 8, **caractérisé en ce que** les angles formés par les directions longitudinales de chacune des roues porteuses avec la direction longitudinale de la roue de test sont identiques.

10. Dispositif mobile de test selon l'une des revendications précédentes, **caractérisé en ce que** les directions des essieux des roues porteuses forment un angle avec la direction transversale de la roue de test.

## Patentansprüche

1. Motorgetriebene mobile Testvorrichtung zur Messung der auf einen rollenden Reifen einwirkenden Kräfte, wobei die Vorrichtung aus einem starren Rahmen besteht, der von wenigstens zwei Laufrädern getragen wird, auf welche ein Drehmoment ausgeübt wird, und der eine mit dem Rahmen fest verbundene Achse aufweist, die ein Testrad zur Messung der auf den Reifen einwirkenden Kräfte trägt, derart, dass die Achse mit dem Rahmen durch einen Belastungszylinder verbunden ist, derart, dass die motorgetriebene mobile Testvorrichtung ein mit der mobilen Testvorrichtung fest verbundenes System umfasst, wobei das System auf das Testrad ein Drehmoment in einer Richtung ausübt, die zu denjenigen, die auf die Laufräder ausgeübt werden, entgegengesetzt ist, und
**dadurch gekennzeichnet, dass** die motorgetriebene mobile Testvorrichtung ein System zur Verbindung zwischen dem Testrad und den Laufrädern aufweist, um wenigstens einen Teil der Leistung, die durch das auf das Testrad ausgeübte Bremsmoment entwickelt wird, in Form von Antriebsmoment auf die Laufräder zu übertragen, oder um wenigstens einen Teil der Leistung, die durch die auf die Laufräder ausgeübten Bremsmomente entwickelt wird, in Form von Antriebsmoment auf das Testrad zu übertragen.

2. Mobile Testvorrichtung nach Anspruch 1, **dadurch gekennzeichnet, dass** sie einem motorgetriebenen Fahrzeug zugeordnet ist.

3. Mobile Testvorrichtung nach Anspruch 1 oder 2, **dadurch gekennzeichnet, dass** der starre Rahmen von vier Laufrädern getragen wird.

4. Mobile Testvorrichtung nach einem der Ansprüche 1 bis 3, **dadurch gekennzeichnet, dass** das Testrad mit dem starren Rahmen über einen Nabenträger verbunden ist, wobei das Rad an der Nabe befestigt ist, dadurch, dass der Nabenträger mit dem starren Rahmen durch eine Anordnung von zwei Armen verbunden ist, dadurch, dass die Arme um Achsen schwenkbar angebracht sind, die quer zu einem ihrer Enden verlaufen, das mit dem starren Rahmen verbunden ist, und dadurch, dass die Arme um Achsen schwenkbar angebracht sind, die quer zu ihrem anderen Ende verlaufen, das mit dem Nabenträger verbunden ist.

5. Mobile Testvorrichtung nach einem der Ansprüche 1 bis 4, **dadurch gekennzeichnet, dass** der Zylinder entlang einer im Wesentlichen vertikalen Richtung positioniert ist.

6. Mobile Testvorrichtung nach Anspruch 4, **dadurch gekennzeichnet, dass** der Belastungszylinder am Nabenträger in einem Querabstand vom Mittelpunkt des Testrades befestigt ist, der kleiner als 30 cm ist.

7. Mobile Testvorrichtung nach einem der vorhergehenden Ansprüche, **dadurch gekennzeichnet, dass** sie ein Werkzeug zur Vorbereitung des Bodens umfasst, welches, in Fahrtrichtung der mobilen Vorrichtung während eines Tests gesehen, vor dem Testrad positioniert ist.

8. Mobile Testvorrichtung nach einem der vorhergehenden Ansprüche, **dadurch gekennzeichnet, dass** die Längsrichtung wenigstens eines Laufrades einen Winkel mit der Längsrichtung des Testrades bildet.

9. Mobile Testvorrichtung nach Anspruch 8, **dadurch gekennzeichnet, dass** die Winkel, die von den Längsrichtungen der einzelnen Laufräder mit der Längsrichtung des Testrades gebildet werden, identisch sind.

10. Mobile Testvorrichtung nach einem der vorhergehenden Ansprüche, **dadurch gekennzeichnet, dass** die Richtungen der Achsen der Laufräder einen Winkel mit der Querrichtung des Testrades bilden.

## Claims

1. Powered mobile test device for measuring loads supported by a running tyre, said device being composed of a rigid frame carried by at least two carrying wheels to which a torque is applied, and having an axle which is fixed to the frame and which carries a test wheel for measuring the loads supported by said tyre, such that the axle is connected to the frame by a loading actuator, such that the motorized mobile test device comprises a system secured to the said mobile test device, the said system applying to the test wheel a torque in the opposite direction to the torques applied to the carrying wheels, and **characterized in that** the motorized mobile test device comprises a linkage system connecting the test wheel and the carrying wheels so as to transmit at least part of the power developed by the braking torque applied to the test wheel in the form of a driving torque to the carrying wheels or so as to transmit at least part of the power developed by the braking torques applied to the carrying wheels in the form of a driving torque to the test wheel.

2. Mobile test device according to Claim 1, **characterized in that** it is associated with a powered vehicle.

3. Mobile test device according to Claim 1 or 2, **characterized in that** the rigid frame is carried by four carrying wheels.

4. Mobile test device according to any of Claims 1 to 3, **characterized in that** the test wheel is connected to the rigid frame by means of a hub support, the wheel being fixed to said hub, **in that** said hub support is connected to the rigid frame by a set of two arms, **in that** each of said arms is hinged about a transverse axis at one of its ends which is connected to the rigid frame, and **in that** each of said arms is hinged about a transverse axis at its other end which is connected to the hub support.

5. Mobile test device according to any of Claims 1 to 4, **characterized in that** the actuator is positioned in a substantially vertical direction.

6. Mobile test device according to Claim 4, **characterized in that** the loading actuator is fixed to the hub support at a transverse distance from the centre of the test wheel which is less than 30 cm.

7. Mobile test device according to any of the preceding claims, **characterized in that** it includes a soil preparation tool positioned in front of the test wheel according to the direction of advance of said mobile device during a test.

8. Mobile test device according to any of the preceding claims, **characterized in that** the longitudinal direction of at least one carrying wheel forms an angle with the longitudinal direction of the test wheel.

9. Mobile test device according to Claim 8, **characterized in that** the angles formed by the longitudinal directions of each of the carrying wheels with the longitudinal direction of the test wheel are identical.

10. Mobile test device according to any of the preceding claims, **characterized in that** the directions of the axles of the carrying wheels form an angle with the transverse direction of the test wheel.
